# EUROPÄISCHE PATENTSCHRIFT

(11) **EP 2 946 187 B1**
(45) Veröffentlichungstag und Bekanntmachung des Hinweises auf die Patenterteilung: **28.09.2016**
(21) Anmeldenummer: 14701492.2
(22) Anmeldetag: 13.01.2014
(51) Int. Cl.: G01M 15/02, G01M 15/14

(54) **VERFAHREN UND VORRICHTUNG ZUM ANTREIBEN EINES TURBOLADERS**
METHOD AND DEVICE FOR DRIVING A TURBOCHARGER
PROCÉDÉ ET DISPOSITIF D'ENTRAÎNEMENT D'UN TURBOCOMPRESSEUR

(30) Priorität: 15.01.2013 DE 102013100368
(43) Veröffentlichungstag der Anmeldung: 25.11.2015
(73) Patentinhaber: Schenck RoTec GmbH, 64293 Darmstadt (DE)
(72) Erfinder: THELEN, Dieter, 64397 Modautal (DE)
(74) Vertreter: Haar, Lucas Heinz Jörn
(86) Internationale Anmeldenummer: PCT/EP2014/050450
(87) Internationale Veröffentlichungsnummer: WO 2014/111330

(56) Entgegenhaltungen:
- GB-A- 611 528

## Beschreibung

Die Erfindung betrifft ein Verfahren zum Antreiben eines eine Turbine und einen Turboverdichter umfassenden Turboladers mit einem Gehäuse, das eine Turbinenkammer mit einem Turbineneinlass und einem Turbinenauslass und eine Verdichterkammer mit einem Verdichtereinlass und einem Verdichterauslass aufweist, und mit einem Rotor mit einem in der Turbinenkammer angeordneten Turbinenrad und einem in der Verdichterkammer angeordneten Verdichterrad, bei welchem Verfahren der Rotor mit Hilfe von dem Turbineneinlass zugeführter Treibluft angetrieben wird. Die Erfindung betrifft weiterhin eine Vorrichtung zur Durchführung des Verfahrens.

Bei der Entwicklung und Produktion von Turboladern ist es zu bestimmten Mess- und Prüfzwecken, beispielsweise zum hochtourigen Auswuchten, erforderlich, den Rotor des Turboladers bis auf seine maximale Betriebsdrehzahl oder eine ähnlich hohe Drehzahl zu bringen. Um dies zu erreichen, ist es aus DE 10 2009 013 432 A1 bekannt, die Turbine des Turboladers mit Treibluft zu beaufschlagen und dem Rotor auf diese Weise die notwendige Antriebsleistung zuzuführen. Als Treibluft dient üblicherweise Druckluft, die beispielsweise einem Druckluftnetz entnommen werden kann. Die zum Antrieb benötigte Menge an Druckluft ist erheblich, zumal die Druckluft in der Regel kalt ist, d.h. Raumtemperatur hat, und dementsprechend das Enthalpiegefälle in der Turbine klein ist. Druckluft ist als Energieträger vergleichsweise teuer und die Energieeffizienz des Antriebs der Turbine mit Druckluft ungünstig. Das Beschleunigen eines Turbolader-Rotors auf maximale Betriebsdrehzahl mit Hilfe von Treibluft verursacht daher nicht unerhebliche Kosten.

Bei einem in DE 10 2011 054 236 A1 beschriebenen Verfahren der angegebenen Art wird die am Verdichterauslass austretende verdichtete Luft in den Turbineneinlass geleitet, wobei sie mittels einer Strahlpumpe der Treibluft zum Antreiben des Turbinenrades zugemischt wird, die mit im Vergleich zur vom Verdichter kommenden Luft höherem Druck und höherer Strömungsgeschwindigkeit in Form eines Strahles in den Turbineneinlass geleitet wird. Auf diese Weise wird zusätzlich die von der Verdichterseite des Turboladers geförderte verdichtete Luft für den Antrieb des Turboladers genutzt und entsprechend weniger Treibluft benötigt. Für das Zumischen mittels Strahlpumpe ist es erforderlich, dass der Druck der vom Verdichter kommenden Luft nur soweit unter dem Druck der Treibluft liegt, dass die Strahlpumpe in der Lage ist, die Zumischung durch Strahlvermischung zu gewährleisten. Die Erfüllung dieser Bedingung hängt von der jeweiligen Auslegung von Turbine und Verdichter des Turboladers ab und ist nicht immer gegeben. Dieses Verfahren ist daher auf Anwendungsfälle beschränkt, bei denen die Druckdifferenz zwischen dem Druck der Treibluft und dem Druck am Auslass des Verdichters nicht sehr groß ist.

Aus RU 2 023 248 C1 ist ein Verfahren zum Prüfen eines Aufladeturboverdichters bekannt, bei dem von einem Anlassverdichter erzeugte Hochdruckluft einer Schwenkdüse zugeführt wird, die in der mit einem Diffusor versehenen ersten Stufe eines der Turbine nachgeordneten Zweistufenejektors angeordnet ist. Zum Durchführen verschiedener Prüfungen kann die Düse in die Laufrichtung des Arbeitsmittels zum Erzeugen eines Unterdrucks im Gasabführungsstutzen der Turbine oder in die Gegenrichtung zum Erzeugen eines Überdrucks im Gasabführungsstutzen der Turbine geschwenkt werden.

Es ist weiterhin aus GB 611 528 A eine Prüfanordnung bekannt, bei der eine zu prüfende Turbine mit Druckluft angetrieben und an einen Verdichter gekuppelt wird, wobei die verdichtete Luft am Verdichterausgang zum Antrieb der Turbine verwendet werden kann, indem sie erwärmt und zum Vergrößern der Luftzufuhr am Turbineneingang zugeführt wird.

Aus RU 2 348 910 C1 ist ein Verfahren zum Prüfen von Turboladern bekannt, bei dem Gas an einem Einlass der Turbine und an einem Einlass des Kompressors injiziert wird, wobei der Kompressor durch die Turbine in Drehung versetzt wird. Eine Rückführung der verdichteten Luft zum Eingang der Turbine ist hierbei nicht vorgesehen.

Der Erfindung liegt die Aufgabe zugrunde, ein verbessertes Verfahren der eingangs genannten Art anzugeben, welches den Treibluftbedarf für das Antreiben des Rotors des Turboladers verringert.

Nach der Erfindung wird die genannte Aufgabe durch das in Patentanspruch 1 angegebene Verfahren gelöst. Eine vorteilhafte Vorrichtung zur Durchführung des Verfahrens ist in Patentanspruch 2 angegeben.

Bei dem Verfahren nach der Erfindung wird die am Verdichterauslass austretende verdichtete Luft in einen Turbinenhilfseinlass geleitet, der stromab vom Turbineneinlass an einer Stelle in die Turbinenkammer mündet, an welcher der Druck im angetriebenen Zustand der Turbine kleiner ist als der Druck der vom Verdichter verdichteten Luft.

Durch das Verfahren nach der Erfindung wird die von dem Verdichter des Turboladers geförderte verdichtete Luft zusätzlich für den Antrieb des Rotors genutzt, indem sie in den Turbinenhilfseinlass geführt wird. Selbstverständlich kann die vom Verdichter geförderte Luft für den Antrieb des Rotors nicht ausreichen, da sowohl in der Turbine als auch im Verdichter Verluste entstehen, die durch von außen zugeführte Energie in Form von Treibluft ausgeglichen werden müssen. Darüber hinaus bedarf es eines Energieüberschusses, um eine kurzzeitige Beschleunigung des Rotors auf hohe Drehzahl zu bewirken. Im Gegensatz zu einem ausschließlich Treibluft verwendenden Antrieb wird bei dem Verfahren nach der Erfindung erheblich weniger Treibluft zum Antreiben des Rotors benötigt, da die in der vom Verdichter kommenden Luft gespeicherte Energie für den Antrieb der Turbine zurückgewonnen werden kann. Im Prinzip müssen durch die zugeführte Treibluft also nur die Energieverluste in Turbine und Verdichter und die Verluste in der Rotorlagerung gedeckt werden. Der Verbrauch an Treibluft kann daher durch das relativ einfach durchzuführende Verfahren nach der Erfindung erheblich gesenkt werden. Dies führt dann auch zu einer entsprechenden Senkung der Kosten für den Antrieb des Turboladers.

Das erfindungsgemäße Verfahren hat weiterhin den Vorteil, dass es von der Auslegung des Turboladers und dem Druck der Treibluft weitgehend unabhängig ist. Der Druck der Treibluft im Turbineneinlass wird in der Turbinenkammer bis auf etwa Atmosphärendruck im Turbinenauslass abgebaut. Durch die Wahl der zwischen Turbineneinlass und Turbinenauslass liegenden Stelle für die Anordnung des Hilfseinlasses kann daher der Druck an der Mündung des Hilfseinlasses so eingestellt werden, dass er den Förderdruck des Turboverdichters genügend unterschreitet, um ein für den Antrieb der Turbine günstiges Druckgefälle für die vom Turboverdichter kommende Luft zu erzielen.

Zur Durchführung des erfindungsgemäßen Verfahrens eignet sich eine Vorrichtung zum Antreiben eines eine Turbine und einen Turboverdichter umfassenden Turboladers, mit einem Gehäuse, das eine Turbinenkammer mit einem Turbineneinlass und einem Turbinenauslass und eine Verdichterkammer mit einem Verdichtereinlass und einem Verdichterauslass aufweist, mit einem Rotor mit einem in der Turbinenkammer angeordneten Turbinenrad und einem in der Verdichterkammer angeordneten Verdichterrad und mit einer an den Turbineneinlass anschließbaren Treibluftquelle, wobei die Turbinenkammer einen Turbinenhilfseinlass aufweist, der stromab vom Turbineneinlass an einer Stelle in die Turbinenkammer mündet, an welcher der Druck im angetriebenen Zustand der Turbine kleiner ist als der Druck der vom Verdichter verdichteten Luft und wobei der Verdichterauslass mit dem Turbinenhilfseinlass durch eine Leitung verbindbar ist, um die an dem Verdichterauslass austretende verdichtete Luft in den Turbinenhilfseinlass zu leiten.

Die Vorrichtung nach der Erfindung ist einfach und kostengünstig herstellbar und unkompliziert in der Handhabung. Zur Steigerung der Effektivität können zusätzlich im Turbineneinlass und/oder im Turbinenhilfseinlass Leitschaufeln angeordnet sein.

Das Verfahren nach der Erfindung ist bei kompletten Turboladern und auch bei Turbolader-Rumpfgruppen anwendbar. Bei Turbolader-Rumpfgruppen besteht das Gehäuse aus einem die Rotorlagerung enthaltenden Mittelgehäuse, das Bestandteil des Turboladers ist, und aus einem Turbinengehäuse und einem Verdichtergehäuse, die an das Mittelgehäuse angesetzt sind und die Turbinenkammer und die Verdichterkammer mit den dazugehörigen Einlässen und Auslässen bilden. Das Verfahren nach der Erfindung ist nicht auf die Anwendung bei Turboladern beschränkt, sondern kann auch bei ähnlich aufgebauten Aggregaten, z.B. den Gaserzeugergruppen kleiner Gasturbinen, angewendet werden, um diese zum Zwecke des Auswuchtens oder zu anderen Erfordernissen anzutreiben.

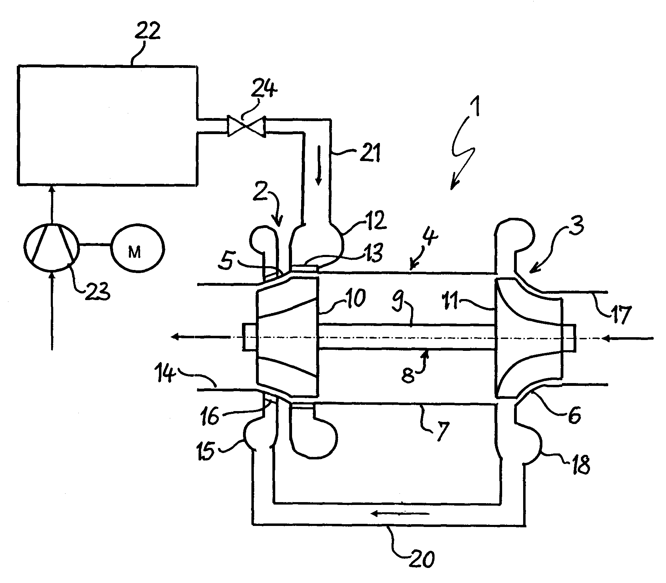

Die Erfindung wird nachfolgend anhand eines Ausführungsbeispiels näher erläutert, das in der Zeichnung dargestellt ist. Die Zeichnung zeigt in schematischer Darstellung einen Turbolader mit einem daran angeschlossenen Treibluftantrieb nach der Erfindung.

Dargestellt ist ein Turbolader 1, der eine Turbine 2 und einen Turboverdichter 3 enthält. Der Turbolader 1 weist ein Gehäuse 4 auf, das eine Turbinenkammer 5 und eine Verdichterkammer 6 und ein zwischen diesen angeordnetes Lagergehäuse 7 bildet. In dem Gehäuse 4 ist ein Rotor 8 mit einer im Lagergehäuse 7 gelagerten Welle 9 angeordnet. An der Welle 9 ist in der Turbinenkammer 5 ein Turbinenrad 10 und in der Verdichterkammer 6 ein Verdichterrad 11 befestigt. Die Turbinenkammer 5 ist auf der Eintrittsseite für das Treibmedium mit einem ringförmigen Turbineneinlass 12 versehen, der das Turbinenrad 10 umgibt und radial in die Turbinenkammer 5 mündet, wobei in der Mündungsöffnung Leitschaufeln 13 angeordnet sein können. An der Stirnseite des Turbinenrads 10 mündet die Turbinenkammer 5 in einen koaxialen Turbinenauslass 14. Zwischen dem Turbineneinlass 12 und dem Turbinenauslass 14 weist die Turbinenkammer 5 einen ringförmigen Turbinenhilfseinlass 15 auf, der in die Turbinenkammer 5 mündet und an der Mündung einen Düsenring 16 mit Leitschaufeln haben kann. Die Verdichterkammer 6 weist stirnseitig einen zentralen Verdichtereinlass 17 und einen ringförmigen Verdichterauslass 18 auf.

Für den Antrieb des Turboladers 1, z.B. zu Messzwecken, wird der Verdichterauslass 18 durch eine Leitung 20 mit dem Turbinenhilfseinlass 15 verbunden. Außerdem wird der Turbineneinlass 12 über eine Leitung 21 an einen Treibluftbehälter 22 angeschlossen, der von einem durch einen Motor angetriebenen Kompressor 23 mit Treibluft gespeist wird. In der Leitung 21 befindet sich ein Ventil 24 zur Steuerung der Treibluftzufuhr. Die Treibluft hat einen Druck, der erheblich höher ist als der maximale Druck, den die vom Turboverdichter 3 geförderte verdichtete Luft im Verdichterauslass 15 bei maximaler Betriebsdrehzahl erreicht.

Soll der Rotor 8 angetrieben und bis auf eine vorzugsweise der maximalen Betriebsdrehzahl entsprechende Drehzahl beschleunigt werden, so wird das Ventil 24 geöffnet und Treibluft in den Turbineneinlass 12 geleitet. Durch die von dort in die Turbinenkammer 5 einströmende Treibluft wird das Turbinenrad 10 angetrieben und der Rotor 8 in Drehung versetzt. Mit wachsender Drehzahl des Rotors 8 wächst die Förderleistung des Turboverdichters 3 und damit auch der Druck der verdichteten Luft in dem dem Turbinenhilfseinlass 15 zugeführten Volumenstrom. Am Turbinenhilfseinlass 15 entsteht ein Druckgefälle zwischen dem Druck der verdichteten Luft und dem Druck in der Turbinenkammer 5, der an dieser Stelle schon auf einen niedrigen Druck abgebaut ist. Das Druckgefälle wächst mit der Drehzahl und erzeugt einen das Turbinenrad 10 antreibenden Luftstrom von hoher Strömungsgeschwindigkeit. Die Turbinendrehzahl nimmt weiter zu, bis sie einen Wert erreicht, bei dem sich ein Gleichgewicht einstellt, bei dem die mit der Treibluft aus dem Treibluftbehälter 22 zugeführte Energie den Energieverlusten in der Turbine 2, in dem Turboverdichter 3 und in der Lagerung des Rotors entspricht. Soll die Rotordrehzahl weiter erhöht werden, so muss durch entsprechende Steuerung des Ventils 24 die zugeführte Treibluftmenge erhöht werden. Umgekehrt kann durch Verringerung der zugeführten Treibluftmenge die Rotordrehzahl gesenkt werden.

Insgesamt ergibt sich durch die Einleitung der von dem Turboverdichter 3 geförderten verdichteten Luft in die Turbine 2 eine deutliche Verringerung der benötigten Treibluftmenge und damit des Energie- und Kostenaufwands für einen Mess- und Testbetrieb des Turboladers 1.

## Patentansprüche

1. Verfahren zum Antreiben eines eine Turbine (2) und einen Turboverdichter (3) umfassenden Turboladers (1), mit einem Gehäuse (4), das eine Turbinenkammer (5) mit einem Turbineneinlass (12) und einem Turbinenauslass (14) und eine Verdichterkammer (6) mit einem Verdichtereinlass (17) und einem Verdichterauslass (18) aufweist, und mit einem Rotor (8) mit einem in der Turbinenkammer (5) angeordneten Turbinenrad (10) und einem in der Verdichterkammer (6) angeordneten Verdichterrad (11), bei welchem Verfahren der Rotor (8) mit Hilfe von dem Turbineneinlass (12) zugeführter Treibluft angetrieben wird, **dadurch gekennzeichnet, dass** die am Verdichterauslass (18) austretende verdichtete Luft in einen Turbinenhilfseinlass (15) geleitet wird, der stromab vom Turbineneinlass (12) an einer Stelle in die Turbinenkammer (5) mündet, an welcher der Druck in einem angetriebenen Zustand der Turbine (2) kleiner ist als der Druck der vom Turboverdichter (3) verdichteten Luft.

2. Vorrichtung zum Antreiben eines eine Turbine (2) und einen Turboverdichter (3) umfassenden Turboladers (1), mit einem Gehäuse (4), das eine Turbinenkammer (5) mit einem Turbineneinlass (12) und einem Turbinenauslass (14) und eine Verdichterkammer (6) mit einem Verdichtereinlass (17) und einem Verdichterauslass (18) aufweist, einem Rotor (8) mit einem in der Turbinenkammer (5) angeordneten Turbinenrad (10) und einem in der Verdichterkammer (6) angeordneten Verdichterrad (11) und mit einer an den Turbineneinlass (12) anschließbaren Treibluftquelle, **gekennzeichnet durch** einen Turbinenhilfseinlass (15), der stromab vom Turbineneinlass (12) an einer Stelle in die Turbinenkammer (5) mündet, an welcher der Druck in einem angetriebenen Zustand der Turbine (2) kleiner ist als der Druck der vom Turboverdichter (3) verdichteten Luft, und **durch** eine Leitung (20), **durch** die der Verdichterauslass (15) mit dem Turbinenhilfseinlass (15) verbindbar ist, um die an dem Verdichterauslass (18) austretende verdichtete Luft in den Turbinenhilfseinlass (15) zu leiten.

3. Vorrichtung nach Anspruch 2, **dadurch gekennzeichnet, dass** im Turbineneinlass und/oder im Turbinenhilfseinlass Leitschaufeln (13) angeordnet sind.

4. Vorrichtung nach einem der Ansprüche 2 oder 3, **dadurch gekennzeichnet, dass** die Treibluftzufuhr durch ein Ventil (24) steuerbar ist.

## Claims

1. A method of driving a turbocharger (1) comprising a turbine (2) and a turbo compressor (3), with a housing (4) which includes a turbine chamber (5) having a turbine inlet (12) and a turbine outlet (14), and a compressor chamber (6) having a compressor inlet (17) and a compressor outlet (18), and with a rotor (8) having a turbine wheel (10) arranged in the turbine chamber (5) and a compressor wheel (11) arranged in the compressor chamber(6), the method including the step of driving the rotor (8) by means of charge air supplied to the turbine inlet (12), **characterized in that** the compressed air exiting at the compressor outlet (18) is directed to a turbine auxiliary inlet (15) which opens downstream from the turbine inlet (12) into the turbine chamber (5) at a site where the pressure in a driven condition of the turbine (2) is lower than the pressure of the air compressed by the turbo compressor (3).

2. A device for driving a turbocharger (1) comprising a turbine (2) and a turbo compressor (3), with a housing (4) which includes a turbine chamber (5) having a turbine inlet (12) and a turbine outlet (14), and a compressor chamber (6) having a compressor inlet (17) and a compressor outlet (18), with a rotor (8) having a turbine wheel (10) arranged in the turbine chamber (5) and a compressor wheel (11) arranged in the compressor chamber (6), and with a source of charge air adapted to be coupled to the turbine inlet (12), **characterized by** a turbine auxiliary inlet (15) which opens downstream from the turbine inlet (12) into the turbine chamber (5) at a site where the pressure in a driven condition of the turbine (2) is lower than the pressure of the air compressed by the turbo compressor (3), and by a line (20) adapted to couple the compressor outlet (18) to the turbine auxiliary inlet (15) in order to direct the compressed air exiting at the compressor outlet (15) into the turbine auxiliary inlet (15).

3. The device according to claim 2, **characterized in that** guide vanes (13) are arranged in the turbine inlet and/or in the turbine auxiliary inlet.

4. The device according to any one of the claims 2 or 3, **characterized in that** the supply of charge air is controllable by a valve (24).

## Revendications

1. Procédé d'entraînement d'un turbocompresseur (1) comprenant une turbine (2) et un turbocompresseur (3), avec un carter (4) qui comprend une chambre de turbine (5) ayant une entrée de turbine (12) et une sortie de turbine (14) et une chambre de compression (6) ayant une entrée de compresseur (17) et une sortie de compresseur (18), et avec un rotor (8) comportant une roue à aubes de turbine (10) disposée dans la chambre de turbine (5) et une roue à aubes de compresseur (11) disposée dans la chambre de compression (6), procédé dans lequel le rotor (8) est entraîné au moyen de l'air de suralimentation fourni à l'entrée de turbine (12), **caractérisé en ce que** l'air comprimé sortant de la sortie de compresseur (18) est dirigé vers une entrée auxiliaire de turbine (15) qui débouche en aval de l'entrée de turbine (12) dans un endroit de la chambre de turbine (5) dans lequel, à l'état entraîné de la turbine (2), la pression est inférieure à la pression de la l'air comprimé par le turbocompresseur (3).

2. Dispositif d'entraînement d'un turbocompresseur (1) comprenant une turbine (2) et un turbocompresseur (3), avec un carter (4) qui comprend une chambre de turbine (5) ayant une entrée de turbine (12) et une sortie de turbine (14) et une chambre de compression (6) ayant une entrée de compresseur (17) et une sortie de compresseur (18), avec un rotor (8) comportant une roue à aubes de turbine (10) disposée dans la chambre de turbine (5) et une roue à aubes de compresseur (11) disposée dans la chambre de compression (6), et avec une source d'air de suralimentation pouvant être raccordée à l'entrée de turbine (12), **caractérisé par** une entrée auxiliaire de turbine (15) qui débouche en aval de l'entrée de turbine (12) dans un endroit de la chambre de turbine (5) dans lequel, à l'état entraîné de la turbine (2), la pression est inférieure à la pression de l'air comprimé par le turbocompresseur (3), et par une conduite (20) à l'aide de laquelle la sortie de compresseur (18) peut être reliée à l'entrée de turbine auxiliaire (15) afin de diriger l'air comprimé sortant de la sortie de compresseur (18) vers l'entrée de turbine auxiliaire (15).

3. Dispositif selon la revendication 2, **caractérisé en ce que** des aubes directrices (13) sont disposées dans l'entrée de turbine et/ou dans l'entrée auxiliaire de turbine.

4. Dispositif selon la revendication 2 ou 3, **caractérisé en ce que** l'alimentation en air de suralimentation peut être contrôlée par une soupape (24).
